# EUROPÄISCHE PATENTSCHRIFT

(11) **EP 0 654 346 B1**
(45) Veröffentlichungstag und Bekanntmachung des Hinweises auf die Patenterteilung: **25.02.1998**
(21) Anmeldenummer: 94116282.8
(22) Anmeldetag: 15.10.1994
(51) Int. Cl.: B32B 31/00, B26D 1/29, B26D 5/02, B26D 7/01

(54) **Trennvorrichtung für Bogenkaschiermaschinen**
Separating device for a sheet laminator
Dispositif de séparation pour un laminoir de feuilles

(30) Priorität: 28.10.1993 DE 4336835
(43) Veröffentlichungstag der Anmeldung: 24.05.1995
(73) Patentinhaber: Billhöfer Maschinenfabrik GmbH, D-90449 Nürnberg (DE)
(72) Erfinder: Bartsch, Peter, DE-90559 Burgthann-Unterferrieden (DE); Hoch, Karl, DE-90542 Eckental (DE)
(74) Vertreter: Matschkur, Götz, Lindner Patent- und Rechtsanwälte

(56) Entgegenhaltungen:
- EP-A- 0 102 031
- EP-A- 0 472 943
- WO-A-93/18917
- GB-A- 1 125 539
- GB-A- 2 135 934
- US-A- 4 526 634
- PATENT ABSTRACTS OF JAPAN vol. 10, no. 191 (M-495) (2247) 4. Juli 1986 & JP-A-61 035 933 (KYUICHIRO KUDO) 20. Februar 1986

## Beschreibung

Die Erfindung bezieht sich auf eine Trennvorrichtung für Bogenkaschiermaschinen zum Separieren der bei einer schuppenförmigen Bogenförderung mit einer durchgehenden Filmschicht überzogenen Bogen unter Auftrennung der freiliegenden Filmschicht im Randbereich des Überlappungsbereiches durch ein bewegtes Messer.

Bei Bogenkaschiermaschinen mit der bekannten schuppenförmigen Bogenförderung ergibt sich die Notwendigkeit, die überzogene durchgehende Filmschicht wenigstens teilweise im Überlappungsbereich der Bögen durchzutrennen bevor die Bögen vereinzelt werden, um sicherzustellen, daß die Filmschicht während des mechanischen Vereinzelungsprozesses entlang der gewünschten Rißlinie abreißt und die aufgebrachte Filmschicht keinen Schaden nimmt.

Um dies zu bewerkstelligen sind bereits verschiedene Trennvorrichtungen bekanntgeworden, die sich unterschiedlicher Techniken bedienen, wie z.B. die in der DE-A-40 27 431 und dem Gebrauchsmuster DE-U-88 05 650.3 beschriebenen Anlagen.

Die in der DE-A-40 27 431 beschriebene Technik bedient sich zweier sich gegenüberstehend angeordneter, sich nicht berührender Walzen, zwischen denen die filmbeschichteten Bögen laufen. Die untere der beiden Walzen dient als Gegendruckwalze, die obere ist, je nach Ausführungsart, mit Messern oder einer Vielzahl von Spitzen ausgestattet.

Werden mehrere, hintereinander angeordnete Perforiermesser verwendet, ergibt sich das Problem der Koordinierung der Umlaufgeschwindigkeit der Walze mit der Fördergeschwindigkeit der Bögen, die sehr exakt sein muß, um zu gewährleisten, daß die Messer genau an dem Überlappungsbereich in die Filmschicht eintauchen. Eine Anpassung an unterschiedliche Bogengrößen ist somit sehr aufwendig. Werden anstatt der Messer eine Vielzahl umlaufend angeordneter Spitzen verwendet, ist die Filmoberfläche nicht in Kontakt mit der Aufreißwalze, da diese in einem definierten Abstand über der Filmschicht angebracht ist und ein Kontakt sich nur in dem doppellagigen Überlappungsbereich ergibt, was zum Antrieb der Aufreißwalze führt und somit die aufwendige und schwierige Koordinierung der Umlaufgeschwindigkeit der Walze mit der Bogenfördergeschwindigkeit entfällt. Jedoch wird ein großer Bereich der Filmoberfläche, nämlich der gesamte Überlappungsbereich, von den Spitzen erfaßt und perforiert und somit beschädigt. Außerdem können sich bei einer perforierten Filmschicht im Gegensatz zu einer eingeschnittenen Filmschicht Probleme beim Ein- und Abreißen der Filmschicht ergeben.

Die in dem Gebrauchsmuster DE-U-88 05 650.3 beschriebene Anlage weist auf einem Träger verschiebbar montierte, mittels pneumatisch gesteuerter und über eine Steuereinheit angesprochene Zylinder bewegte Messer zum Durchtrennen der Filmschicht auf. Mit dieser Anordnung können sowohl parallellaufende als auch hintereinander fortlaufende Filmschichten angeschnitten werden. Die Steuerung der Zylinder ist jedoch sehr kompliziert und aufwendig. Gleiches gilt für die von Hand auf dem Träger zu verschiebenden Schneideinheiten.

Die DE-A-42 32 332 beschreibt zwar bereits eine gegenüber dem vorgenannten Gebrauchsmuster einfacher aufgebaute und zu steuernde Trennvorrichtung mit einem ebenfalls translatorisch bewegbaren, in diesem Fall an einer schwenkbar gelagerten, durch einen Schrittmotor bewegten Schwinge befestigbaren Messer. Beide Anordnungen mit translatorisch bewegten Messern haben jedoch zum einen den Nachteil, daß das Messer ständig auf der Bahn gleiten muß und damit den Randbereich der Bahn beschädigen kann und daß darüber hinaus auch notwendigerweise eine Steuerung erforderlich ist, die den Überlappungsbereich erfaßt, um die Messerbewegung so zu steuern, daß sie beim Passieren eines solchen Überlappungsabschnitts eine Schneidbewegung auslöst.

Der Erfindung liegt daher die Aufgabe zugrunde, eine Trennvorrichtung für Bogenkaschiermaschinen der eingangs genannten Art so auszugestalten, daß bei einfachem Aufbau und ohne besondere Steuerung bezüglich des Überlappungsbereichs und damit auch ohne notwendige Korrelierung mit der Fördergeschwindigkeit der Bogen ein sicheres und schonendes Aufschneiden der Filmschicht im Randbereich möglich ist.

Diese Aufgabe ist durch die Merkmale des Anspruchs 1 gelöst.

Durch die erfindungsgemäß ausgebildete Trennvorrichtung ergibt sich zunächst der entscheidende Vorteil gegenüber allen bisher bekannten Anordnungen, daß eine besondere Steuerung der Trennvorrichtung bezüglich der Bogenförderung völlig entfallen kann. Es braucht nicht mehr erfaßt zu werden, wann der Überlappungsabschnitt in die Trennvorrichtung einläuft und es bedarf auch keiner komplizierten Taktsteuerung des Messers in Korrelation mit einer solchen Abtasteinrichtung für den Überlappungseinlauf. Da das Klappmesser eine sehr viel höhere Umfangsgeschwindigkeit aufweist als die Fördergeschwindigkeit der Bogenbahn, was auch bei hohen Fördergeschwindigkeiten problemlos möglich ist, ist gewährleistet, daß das bzw. ein Messer den auf dem Drehteller gleitend vorbeilaufenden Überlappungsabschnitt überholt und dabei die Filmschicht aufreißt.

Besonders einfach können die Klappmesser jeweils am oberen Ende eines den Drehteller in einer Ausnehmung durchsetzenden Tragkörpers befestigt sein, der am unteren Ende am Drehteller gelagert und mit einem Querarm mit einer Tastrolle versehen ist, die an einer feststehenden Kurvenscheibe unter dem Drehteller läuft. Durch eine einfache exzentrisch angeordnete und/oder ausgebildete Kurvenscheibe läßt sich somit in einfachster Weise erreichen, daß die Messer, nachdem sie von der Bogenbahn wieder herausgelaufen sind, in eine angekippte Stellung hochgehoben werden, so daß sie auf der gegenüberliegenden Seite beim Wiederauflaufen auf die Bogenbahn über dieser liegen und dann unmittelbar nach dem Überlaufen abgesenkt werden, so daß sie auf der Bogenbahn aufsitzen, um die Filmschicht am äußeren Rand aufzuschneiden. Dabei ergibt sich durch diese nur kurze Überlagerung während des Aufsitzens eine geringere Gefahr einer Verletzung des Randbereichs der Bogenbahn als bei den bekannten translatorischen Messern, die ständig auf der Bogenbahn gleiten. Die Trägerkörper werden dabei durch Federn in die abgesenkte Arbeitsstellung der Klappmesser vorgespannt. Durch entsprechende Ausbildung der Kurvenscheibe ist es dabei möglich, eine Einstellung dahingehend vorzunehmen, daß entweder die Tastrolle auch in der untersten Stellung an der Kurvenscheibe anliegt, was die Möglichkeit bietet, daß das Messer geringfügig oberhalb der Bogenbahn läuft und damit diese überhaupt nicht beschädigen kann, oder aber daß die Kurvenbahn so ausgebildet ist, daß unter der Wirkung der Feder das Messer gleitend auf der Bogenbahn aufliegt und die Tastrolle geringfügig von der Kurvenscheibe beabstandet läuft.

Um in jedem Fall ein sicheres Einschneiden eines Klappmessers in die Folienüberlappungsbereiche der Bogen zu gewährleisten, kann in Weiterbildung der Erfindung vorgesehen sein, daß auf dem Drehteller - in dessen Drehrichtung vor den Klappmessern - Anhebekeile für den Rand der Bogenbahn befestigt sind, die vorzugsweise auswechselbar in Vertiefungen des Drehteller mit versenkter Vorderkante angeordnet sein können. Durch diese Anhebekeile erfolgt ein Ankippen des Überlappungsbereichs, so daß die bei dünnen Papierbogen ja fast horizontal, d.h. parallel zum Drehtreller liegende Filmschicht im Überlappungsbereich etwas schräggestellt wird, so daß das Klappmesser besser einschneiden kann.

Zur Anpassung der Anordnung an unterschiedliche Produktionsbedingungen, insbesondere an die Verarbeitung unterschiedlicher Bogen, kann in Ausgestaltung der Erfindung vorgesehen sein, daß die Anhebekeile auf einem äußeren Ringabschnitt des Drehtellers angeordnet sind, der lösbar feststellbar gegen den inneren Zentralbereich des Drehtellers verdrehbar ist. Auf diese Art und Weise kann der Abstand zwischen den Messern und den voranlaufenden Anhebekeilen verstellt werden, so daß beim Auftrennen der Folienschicht bei dickeren Bogen der Abstand entsprechend größer gewählt werden kann.

Schließlich liegt es auch noch im Rahmen der Erfindung, den Drehteller, der bevorzugt durch einen Gleichstrommotor angetrieben werden kann, gegenüber seinem am Bogenfördergestell befestigbaren Tragteil in der Höhe, vorzugsweise über ein Handrad, verstellbar auszubilden.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: eine Aufsicht auf eine erfindungsgemäße Trennvorrichtung,
- Fig. 2: einen vergrößerten Schnitt längs der Linie II-II in Fig. 1,
- Fig. 3: einen versetzten Schnitt längs der Linie III-III in Fig. 1, und
- Fig. 4: einen vergrößerten Teilschnitt des rechten oberen Abschnitts IV in Fig. 3 bei hochgeschwenktem Klappmesser.

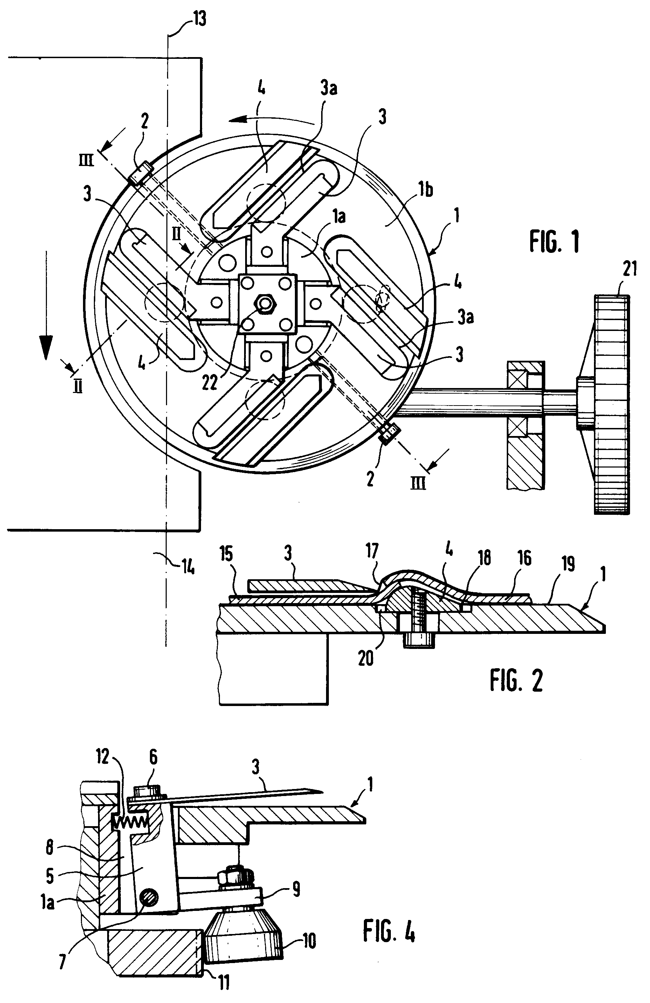

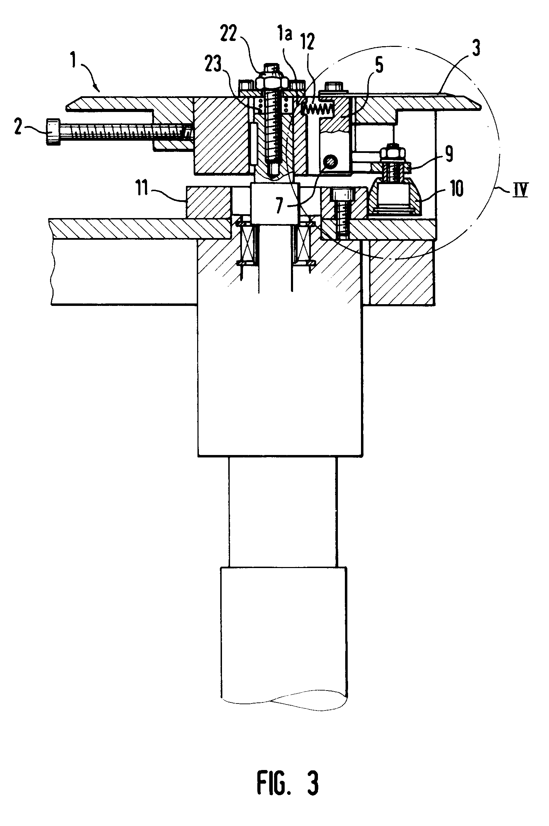

Auf einem Drehteller 1 mit einem inneren Zentralbereich 1a und einem demgegenüber verdrehbaren und durch Stellschrauben 2 arretierbaren äußeren Ringabschnitt 1b sind äquidistant verteilt vier Klappmesser 3 und vier diesen vorlaufende Anhebekeile 4 angeordnet, wobei die Anhebekeile 4 jeweils auf dem äußeren Ringabschnitt 1b befestigt sind, während die Klappmesser 3 am Zentralbereich 1a des Drehtellers 1 gelagert sind. Die Lagerung der Klappmesser 3 erfolgt über Tragkörper 5, an deren oberen Enden die Messer 3 mit Hilfe von Schrauben 6 auswechselbar befestigt sind. Die Tragkörper 5 sind am unteren Ende auf einer Achse 7 des Zentralbereichs 1a gelagert und durchsetzen dabei eine Ausnehmung 8. Am unteren Ende des Tragkörpers 5 ist ein Querarm 9 mit einer Tastrolle 10 angeordnet, die an einer unterhalb des rotierenden Drehtellers 1 feststehenden Kurvenscheibe 11 läuft. Durch eine Feder 12 wird das gesamte Klappmesser in seine Arbeitsposition vorgespannt und damit auch die Tastrolle 10 an die Kurvenscheibe 11 angedrückt. Die Kurvenscheibe 11 ist dabei so ausgebildet und angeordnet, daß jedes Messer 3 beim Einlaufen in Fig. 1 oben über die strichpunktiert angedeutete Kante 13 der Bogenbahn aus überlappten Einzelbogen mit einer sie überdeckenden Folie sich in der in Fig. 4 gezeigten angehobenen Stellung befindet, so daß das Messer unbehindert über den Rand 13 der Bogenbahn laufen kann. Nach dem Überlaufen erfolgt sofort die Absenkung in die auf der Bogenbahn 14 aufliegende Stellung gemäß Fig. 2 und 3 (in letzterer ist die Bahn der besseren Übersichtlichkeit halber nicht mit eingezeichnet), so daß das Messer beim Überschreiten des etwa 90°-Winkels, währenddessen es auf der Bogenbahn läuft, eine etwaige dort befindliche Überlappungskante einholt und dann im Überlappungsbereich zweier Bogen 15 und 16 die Folie 17 (Fig. 2) etwa 3 cm im Randbereich aufschneidet. Durch eine Trennvorrichtung mit Bremsrollen und demgegenüber schneller bewegten Abreißrollen kann dann eine endgültige Separierung der Bogen erfolgen, nachdem die Folie erst einmal am Rand eingeschnitten worden ist.

Durch die, gegenüber den Messern 3 vorlaufenden, Anhebekeile erfolgt eine Schrägstellung des Überlappungsbereichs und damit eine etwas gegenüber der Horizontalen stärker geneigte Anordnung der Folie 17 im Überlappungsbereich, so daß das Messer 3 besser einschneiden kann, nachdem bei dünnen Papierbogen 15, 16 die Folie im Überlappungsbereich ja nahezu horizontal verläuft und somit von der Kante des Messers 3 nur schwer erfaßt werden könnte. Die Anhebekeile, deren vorlaufende Kanten 18 in der Oberfläche 19 des Drehtellers 1 liegen bzw. auch unter diese abgesenkt sind, sind in Aussparungen 20 des Drehtellers 1 angeordnet.

Bei 21 erkennt man ein Handrad, mit Hilfe dessen der gesamte Drehteller quer zur Bahnlaufrichtung verstellbar ist, so daß damit unterschiedliche Bahnbreiten bearbeitet werden können und/oder die Einschnittiefe veränderbar ist. Darüber hinaus ist der Drehteller über die Mutter 22 und die Feder 23 auch in der Höhe verstellbar. Die Antriebseinrichtung für den Drehteller, die vorzugsweise einen Gleichstrommotor umfassen kann, ist, da solche Antriebseinrichtungen in der Praxis hinreichend bekannt sind, im einzelnen nicht mit dargestellt. Entscheidend ist dabei lediglich, daß die Antriebsvorrichtung dem Drehteller eine Drehgeschwindigkeit verleihen kann, so daß die Umfangsgeschwindigkeit der in die aufzutrennende Folie einschneidenden Messerbereiche erheblich ist als die Fördergeschwindigkeit der Bogenbahn, so daß ein Messer eine im Überlappungsbereich zwischen Messer und Folienbahn angeordnete Kante von hinten einholen kann. In Verbindung mit den vier gezeigten Messern ist auf diese Weise sichergestellt, daß unabhängig davon, wie die Überlappungsbereiche an der Trennvorrichtung ankommen, auf jeden Fall ein Auftrennen der Folie stattfindet.

## Patentansprüche

1. Trennvorrichtung für Bogenkaschiermaschinen zum Separieren der bei einer schuppenförmigen Bogenförderung mit einer durchgehenden Filmschicht überzogenen Bogen unter Auftrennung der freiliegenden Filmschicht im Randbereich des Überlappungsbereiches durch ein bewegtes Messer, dadurch gekennzeichnet, daß auf einem die Bogenbahn (14) untergreifenden Drehteller (1) wenigstens ein, vorzugsweise mehrere äquidistant über den Umfang verteilte, Klappmesser (3) mit einer im wesentlichen radialen Schneide (3a) schwenkbar gelagert ist, das durch eine Kurvensteuerung nach dem Überlaufen der Bogenbahnkante (13) aus einer angehobenen Stellung (Fig. 4) in eine auf der Bogenbahn (14) gleitende Arbeitsstellung absenkbar und beim Auslaufen von der Bogenbahn wieder anhebbar ist, und daß die Umfangsgeschwindigkeit des in die Filmschicht (17) einschneidenden Messerabschnitts erheblich größer ist als die Fördergeschwindigkeit der Bogenbahn (14).

2. Trennvorrichtung nach Anspruch 1, dadurch gekennzeichnet, daß die Klappmesser (3) jeweils am oberen Ende eines den Drehteller (1) in einer Ausnehmung (8) durchsetzenden Tragkörpers (5) befestigt sind, der am unteren Ende auf einer Achse (7) am Drehteller (1) gelagert und mit einem Querarm (9) mit einer Tastrolle (10) versehen ist, die an einer feststehenden Kurvenscheibe (11) unter dem Drehteller (1) läuft.

3. Trennvorrichtung nach Anspruch 2, dadurch gekennzeichnet, daß der Trägerkörper (5) durch eine Feder (12) in die abgesenkte Arbeitsstellung des Klappmessers (3) vorgespannt ist.

4. Trennvorrichtung nach einem der Ansprüche 1 bis 3, dadurch gekennzeichnet, daß auf dem Drehteller (1) - in dessen Drehrichtung vor den Klappmessern (3) - Anhebekeile (4) für den Rand der Bogenbahn (14) befestigt sind.

5. Trennvorrichtung nach Anspruch 4, dadurch gekennzeichnet, daß die Anhebekeile (4) auf einem äußeren Ringabschnitt (1b) des Drehtellers angeordnet sind, der lösbar feststellbar gegen den inneren Zentralbereich (1a) des Drehtellers (1) verdrehbar ist.

6. Trennvorrichtung nach Anspruch 4 oder 5, dadurch gekennzeichnet, daß die Anhebekeile (4) auswechselbar in Vertiefungen (20) des Drehtellers (1) mit versenkter Vorderkante (18) angeordnet sind.

7. Trennvorrichtung nach einem der Ansprüche 1 bis 6, dadurch gekennzeichnet, daß der Drehteller (1) gegenüber seinem am Bogenfördergestell befestigbaren Tragteil in der Höhe verstellbar ist.

8. Trennvorrichtung nach einem der Ansprüche 1 bis 7, dadurch gekennzeichnet, daß der Drehteller (1), über ein Handrad (21), quer zur Bahnlaufrichtung verstellbar ist.

9. Trennvorrichtung nach einem der Ansprüche 1 bis 8, gekennzeichnet durch einen den Drehteller (1) antreibenden Gleichstrommotor.

## Claims

1. Separating device for sheet laminating machines for separating the sheet coated with a continuous layer of film during sheet-by-sheet conveyance by cutting into the exposed film layer in the peripheral region of the overlap region by means of a moving blade, characterised in that at least one, preferably a plurality of tilting blades (3) with a substantially radial cutting edge (3a) is pivotably mounted on and distributed equidistantly over the circumference of a rotary disk (1) engaging beneath the sheet web (14), which tilting blade can be lowered by a cam control from a raised position (Fig. 4) into an operating position sliding upon the sheet web (14) after passing over the sheet web edge (13) and can be raised again upon leaving the sheet web, and the circumferential velocity of the blade section cutting into the film layer (17) is substantially higher than the conveying velocity of the sheet web (14).

2. Separating device according to claim 1, characterised in that the tilting blades (3) are each secured at the upper end of a support element (5) which penetrates the rotary disk (1) in a recess (8), is mounted at its lower end on an axle (7) on the rotary disk (1) and is provided with a cross arm (9) with a feeler roller (10), which runs along a fixed cam disk (11) beneath the rotary disk (1).

3. Separating device according to claim 2, characterised in that the support element (5) is prestressed by a spring (12) into the lowered operative position of the tilting blade (3).

4. Separating device according to one of claims 1 to 3, characterised in that ramps (4) for the edge of the sheet web (14) are secured to the rotary disk (1) - in front of the tilting blades (3) in the direction of rotation of the rotary disk (1).

5. Separating device according to claim 4, characterised in that the ramps (4) are arranged on an outer annular section (1b) of the rotary disk which is rotatable and releasably lockable relative to the inner central region (1a) of the rotary disk (1).

6. Separating device according to claim 4 or 5, characterised in that the ramps (4) are replaceably arranged in recesses (20) in the rotary disk (1) with a sunken front edge (18).

7. Separating device according to one of claims 1 to 6, characterised in that the rotary disk (1) is adjustable in its height relative to its support section which can be secured to the sheet conveyor frame.

8. Separating device according to one of claims 1 to 7, characterised in that the rotary disk (1) is adjustable transversely to the sheet running direction by means of a hand wheel (21).

9. Separating device according to one of claims 1 to 8, characterised by a direct current motor driving the rotary disk (1).

## Revendications

1. Dispositif séparateur pour machines à doubler des feuilles, destiné à séparer les feuilles recouvertes d'une pellicule de film continue, dans le cas d'un transport de feuilles en écailles, tout en sectionnant, à l'aide d'un couteau mobile, la pellicule de film dégagée dans la zone de bordure de la zone de chevauchement, caractérisé en ce que, sur un plateau tournant (1) s'engageant sous la nappe de feuilles (14), est monté à pivotement au moins un couteau basculant (3), et de préférence sont montés à pivotement plusieurs couteaux basculants (3) répartis à intervalles égaux sur la périphérie, et possédant un tranchant (3a) sensiblement radial, une commande à came permettant d'abaisser ce couteau, après son passage au-dessus du bord (13) de la nappe de feuilles, d'une position soulevée (figure 4) dans une position de travail glissant sur la nappe de feuilles (14), et de le soulever à nouveau lorsqu'il est sorti de la nappe de feuilles, et en ce que la vitesse périphérique du tronçon de couteau mordant dans la pellicule de film (17) est beaucoup plus élevée que la vitesse de transport de la nappe de feuilles (14).

2. Dispositif séparateur selon la revendication 1, caractérisé en ce que les couteaux basculants (3) sont fixés chacun à l'extrémité supérieure d'un corps de support (5), qui traverse le plateau tournant (1) dans un évidement (8), et qui, à son extrémité inférieure, est monté sur un axe (7) placé sur le plateau tournant (1), et est pourvu d'un bras transversal (9) comportant un galet d'appui (10) se déplaçant sur un disque de came (11) fixe, sous le plateau tournant (1).

3. Dispositif séparateur selon la revendication 2, caractérisé en ce que le corps de support (5) est précontraint, par un ressort (12), dans la position de travail abaissée du couteau basculant (3).

4. Dispositif séparateur selon l'une des revendications 1 à 3, caractérisé en ce que sur le plateau tournant (1), sont fixés, devant les couteaux basculants (3) en se référant au sens de rotation de ce dernier, des coins de soulèvement (4) pour le bord de la nappe de feuilles (14).

5. Dispositif séparateur selon la revendication 4, caractérisé en ce que les coins de soulèvement (4) sont disposés sur une partie annulaire extérieure (1b) du plateau tournant, qui peut être entraînée en rotation par rapport à la zone centrale intérieure (1a) du plateau tournant (1), et être immobilisée de manière déblocable.

6. Dispositif séparateur selon la revendication 4 ou 5, caractérisé en ce que les coins de soulèvement (4) sont disposés, de manière interchangeable, dans des creux (20) du plateau tournant (1), le bord avant (18) des coins de soulèvement étant encastré.

7. Dispositif séparateur selon l'une des revendications 1 à 6, caractérisé en ce que le plateau tournant (1) est déplacable en hauteur par rapport à sa partie de support pouvant être fixée au bâti de transport des feuilles.

8. Dispositif séparateur selon l'une des revendications 1 à 7, caractérisé en ce que le plateau tournant (1) peut être déplacé transversalement à la direction de défilement de la nappe, par l'intermédiaire d'un volant à main (21).

9. Dispositif séparateur selon l'une des revendications 1 à 8, caractérisé par un moteur à courant continu entraînant le plateau tournant (1).
